# EUROPEAN PATENT APPLICATION

(11) **EP 4 406 696 A1**
(43) Date of publication of application: **31.07.2024**
(21) Application number: 22872832.5
(22) Date of filing: 16.09.2022
(51) Int. Cl.: B23Q 17/00, B23B 31/00, B23Q 3/155

(54) **MACHINE TOOL, CONTROL METHOD, AND CONTROL PROGRAM**

(30) Priority: 21.09.2021 JP 2021152818
(71) Applicant: DMG Mori Co., Ltd., Yamatokoriyama-shi, Nara 639-1160 (JP)
(72) Inventor: FUJIOKA, Kazuya, Yamatokoriyama-shi, Nara 639-1160 (JP)
(74) Representative: Grünecker Patent- und Rechtsanwälte PartG mbB
(86) International application number: PCT/JP2022/034708
(87) International publication number: WO 2023/048078

(57) **Abstract**

A machine tool (100) includes a tooling holding portion (70) having an insertion opening for a tooling (60). The tooling (60) includes a tool holding portion (62) for holding a tool, and an HSK shank (64) that is to be inserted into the insertion opening. The machine tool (100) further includes a detection unit (45) for detecting physical information indicating a state of a gap between the tooling (60) and the tooling holding portion (70), and a control unit (50) for controlling the machine tool (100). The control unit (50) includes an acquisition unit (54) for acquiring the physical information from the detection unit (45) while the tooling (60) is mounted to the tooling holding portion (70), a determining unit (56) for determining, based on the acquired physical information, whether or not the tooling (60) is normally mounted to the tooling holding portion (70), and an execution unit (58) for executing predetermined processing if it was determined that the tooling (60) is not normally mounted to the tooling holding portion (70).

## Description

### Technical Field

The present disclosure relates to a machine tool, a control method, and a control program.

### Background Art

JP 2006-315158 (Patent Document 1) discloses a machine tool with an object of detecting abnormal mounting of a tool holder. This machine tool "determines that there is an abnormality in the mounting of the tool holder to the main shaft based on change over time in the amount of displacement of the outer circumferential surface of the flange of the tool holder".

### Citation List

### Patent Document

Patent Document 1: JP 2006-315158A

### Summary of Invention

### Technical Problem

A tool is mounted to the machine tool via a tooling. In other words, the tooling functions as a connection interface between the tool and the machine tool.

The tooling is constituted by a tool holder, which is the tool holding portion, and a shank, which is the portion for connection to the machine tool. Examples of shank standards include a BT shank, a BBT shank, and an HSK shank. The machine tool disclosed in Patent Document 1 detects a mounting abnormality with regard to the tool holder of a BT shank or a BBT shank.

An HSK shank is provided with two grooves that have with different depths. When an HSK shank is inserted into the tooling holding portion of a spindle or a magazine, the two grooves of the HSK shank engage with one or two engaging portions provided in the tooling holding portion. The tooling is fixed to the tooling holding portion in this way.

The two grooves provided in the HSK shank are provided so as to oppose each other. Because the difference between the depths of the grooves is very small, the HSK shank can possibly be mounted to the tooling holding portion in a state inverted 180 degrees from the intended orientation. If machining is performed while the HSK shank is abnormally mounted to the tooling holding portion, the workpiece machining accuracy may decrease. There is also a possibility that the HSK shank may fall while performing workpiece machining. If the HSK shank falls, there is a risk of damage to the workpiece, the tool, or the body of the machine tool. Therefore, there is desire for a technology for detecting abnormal mounting of an HSK shank to a machine tool.

### Solution to Problem

In a first aspect of the present disclosure, a machine tool includes a tooling holding portion having an insertion opening for a tooling. The tooling includes a tool holding portion configured to hold a tool, and an HSK shank configured to be inserted into the insertion opening. The machine tool further includes: a detection unit configured to detect physical information indicating a state of a gap between the tooling and the tooling holding portion; and a control unit configured to control the machine tool. The control unit includes an acquisition unit configured to acquire the physical information from the detection unit while the tooling is mounted to the tooling holding portion, a determining unit configured to determine, based on the acquired physical information, whether or not the tooling is mounted to the tooling holding portion in an inverted state of being inverted around an insertion direction in which the tooling is inserted into the tooling holding portion, and an execution unit configured to execute predetermined processing in a case where the determining unit determined that the tooling is mounted to the tooling holding portion in the inverted state.

In an aspect of the present disclosure, the detection unit includes a camera. The camera is configured to acquire, as the physical information, an image showing the gap.

In an aspect of the present disclosure, the tooling holding portion includes an interlocking member configured to interlock with the HSK shank when the HSK shank is inserted into the insertion opening. The detection unit includes a position sensor configured to detect a position of the interlocking member as the physical information.

In an aspect of the present disclosure, the HSK shank includes a cylindrical portion. The cylindrical portion includes a first groove having a first depth in a direction along a central axis of the cylindrical portion, and a second groove having a second depth in the direction along the central axis of the cylindrical portion. The second depth is different from the first depth. The tooling holding portion includes a first engaging portion configured to engage with the first groove when the HSK shank is inserted into the insertion opening, and a second engaging portion configured to engage with the second groove when the HSK shank is inserted into the insertion opening.

In an aspect of the present disclosure, in a case where the physical information indicates that a width of the gap is greater than or equal to a predetermined value, the determining unit determines that the tooling is mounted to the tooling holding portion in the inverted state.

In an aspect of the present disclosure, the tooling holding portion includes at least one of a magazine, a spindle, and a tool rest.

In another aspect of the present disclosure, a control method for controlling a machine tool is provided. The machine tool includes a tooling holding portion having an insertion opening for a tooling. The tooling includes a tool holding portion configured to hold a tool, and an HSK shank configured to be inserted into the insertion opening. The machine tool further includes a detection unit configured to detect physical information indicating a state of a gap between the tooling and the tooling holding portion. The control method includes: a step of acquiring the physical information from the detection unit while the tooling is mounted to the tooling holding portion; a step of determining, based on the acquired physical information, whether or not the tooling is mounted to the tooling holding portion in an inverted state of being inverted around an insertion direction in which the tooling is inserted into the tooling holding portion; and a step of executing predetermined processing in a case where it was determined that the tooling is mounted to the tooling holding portion in the inverted state.

In another aspect of the present disclosure, a control program for controlling a machine tool is provided. The machine tool includes a tooling holding portion having an insertion opening for a tooling. The tooling includes a tool holding portion configured to hold a tool, and an HSK shank configured to be inserted into the insertion opening. The machine tool further includes a detection unit configured to detect physical information indicating a state of a gap between the tooling and the tooling holding portion. The control program causes the machine tool to execute: a step of acquiring the physical information from the detection unit while the tooling is mounted to the tooling holding portion; a step of determining, based on the acquired physical information, whether or not the tooling is mounted to the tooling holding portion in an inverted state of being inverted around an insertion direction in which the tooling is inserted into the tooling holding portion; and a step of executing predetermined processing in a case where it was determined that the tooling is mounted to the tooling holding portion in the inverted state.

These and other objects, features, aspects, and advantages of the present invention will become apparent from the following detailed description of the invention, taken in conjunction with the accompanying drawings.

### Brief Description of Drawings

FIG. 1 is a diagram showing the appearance of a machine tool.
FIG. 2 is a diagram showing an example of a drive mechanism of the machine tool.
FIG. 3 is a perspective view showing an HSK tooling.
FIG. 4 is a side view of the HSK tooling viewed from an X-axis direction shown in FIG. 3.
FIG. 5 is a cross-sectional view of the HSK tooling viewed from the X-axis direction shown in FIG. 3.
FIG. 6 is a diagram schematically showing an aspect of mounting of the HSK tooling to a tooling holding portion.
FIG. 7 is a diagram schematically showing an aspect of mounting of the HSK tooling to the tooling holding portion.
FIG. 8 is a diagram showing an example of a functional configuration of the machine tool.
FIG. 9 is a front view of a magazine.
FIG. 10 is a conceptual diagram schematically showing processing for detecting abnormal mounting of the HSK tooling.
FIG. 11 is a diagram showing an example of a hardware configuration of a CPU (Central Processing Unit) unit.
FIG. 12 is a diagram showing an example of a hardware configuration of a CNC (Computer Numerical Control) unit.
FIG. 13 is a diagram showing an example of a hardware configuration of an information processing device.
FIG. 14 is a diagram showing an example of a hardware configuration of an operation panel.
FIG. 15 is a flowchart showing part of processing executed by a control unit of the machine tool.
FIG. 16 is a diagram schematically showing an aspect of mounting of the HSK tooling to the tooling holding portion.
FIG. 17 is a diagram schematically showing an aspect of mounting of the HSK tooling to the tooling holding portion.
FIG. 18 is a diagram showing an example of a functional configuration of a machine tool according to a variation.

### Description of Embodiments

Hereinafter, embodiments of the present invention will be described with reference to the drawings. In the following description, parts and constituent elements that are the same are denoted by the same reference numerals. They also have the same names and functions. Therefore, detailed description thereof will not be repeated. Note that the embodiments and the variations described below may be selectively combined as appropriate.

### <A. Machine tool 100>

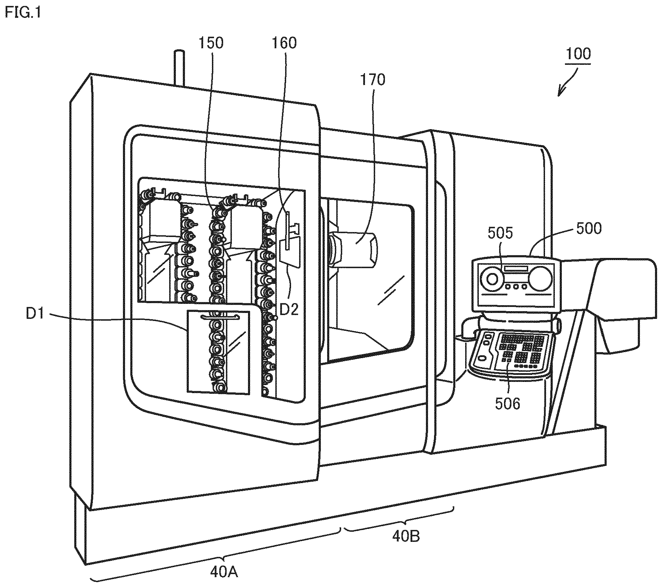

First, a machine tool 100 according to an embodiment will be described with reference to FIG. 1. FIG. 1 is a diagram showing the appearance of the machine tool 100.

The term "machine tool" as used in the present specification is a concept that includes various types of devices that have the function of processing a workpiece. The machine tool 100 may be a horizontal machining center or a vertical machining center. Alternatively, the machine tool 100 may be a lathe, an additive processing machine, or another type of cutting machine or grinding machine.

The machine tool 100 has a tool storage unit 40A and a machining body 40B. The tool storage unit 40A and the machining body 40B are partitioned by a cover.

A magazine 150 and an ATC (Automatic Tool Changer) 160 are provided in the tool storage unit 40A. A spindle 170 is provided in the machining body 40B.

A worker can load tools into the magazine 150 through a door D1. The machining body 40B processes a workpiece using at least one of various tools held in the magazine 150.

More specifically, the machine tool 100 drives the magazine 150 to move one tool (hereinafter also referred to as the "next tool") that corresponds to a machining process to a first tool exchange position. The machine tool 100 also drives the spindle 170 to move the tool mounted on the spindle 170 (hereinafter also referred to as the "used tool") to a second tool exchange position. Thereafter, the ATC 160 exchanges the next tool waiting at the first tool exchange position with the used tool waiting at the second tool exchange position. Tools are exchanged via a door D2 provided in the partition between the machining body 40B and the tool storage unit 40A. The door D2 is a sliding door, for example, and is opened and closed by a drive source such as a motor. Thereafter, the spindle 170 processes the workpiece using the next tool that was mounted.

The machine tool 100 is also provided with an operation panel 500. The operation panel 500 includes a display 505 for displaying various types of information regarding machining, and operation keys 506 for receiving various types of operations performed on the machine tool 100.

### <B. Drive mechanism of machine tool 100>

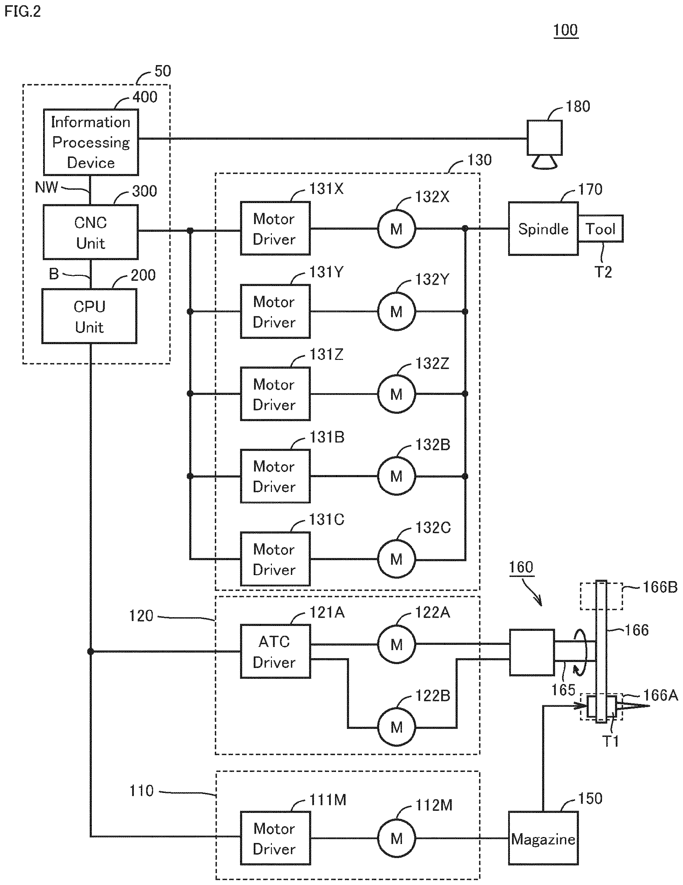

Next, various configurations of the machine tool 100 will be described with reference to FIG. 2. FIG. 2 is a diagram showing an example of the drive mechanism of the machine tool 100.

As shown in FIG. 2, the machine tool 100 includes a control unit 50, drive units 110, 120, and 130, the magazine 150, the ATC 160, and the spindle 170.

For convenience in the description, the gravitational direction will also be referred to as the "X-axis direction" below. The direction orthogonal to the X-axis on the horizontal plane will also be referred to as the "Y-axis direction". The direction orthogonal to both the X-axis direction and the Y-axis direction will also be referred to as the "Z-axis direction".

The "control unit 50" in the present specification means the device that controls the machine tool 100. The control unit 50 may have any device configuration. The control unit 50 may be constituted by a single control unit, or may be constituted by a plurality of control units. In the example shown in FIG. 2, the control unit 50 is constituted by a CPU unit 200, a CNC unit 300, and an information processing device 400. Note that the control unit 50 may include the above-described operation panel 500 (see FIG. 1).

The CPU unit 200 and the CNC unit 300 communicate with each other via a bus B, for example. The CNC unit 300 and the information processing device 400 communicate with each other via a network NW, for example.

The CPU unit 200 is a PLC (Programmable Logic Controller), for example. The CPU unit 200 controls the drive unit 110 in accordance with a PLC program designed in advance. This PLC program is written using a ladder program, for example.

The drive unit 110 is a drive mechanism for driving the magazine 150 to rotate. The drive unit 110 may have any device configuration. The drive unit 110 may be constituted by a single drive unit, or may be constituted by a plurality of drive units. In the example shown in FIG. 2, the drive unit 110 is constituted by a motor driver 111M and a motor 112M.

The motor driver 111M drives the magazine 150 in accordance with control commands from the CPU unit 200. The magazine 150 is provided with the motor 112M. The motor 112M may be a servo motor, may be a stepping motor, or may be another type of motor.

As more specific processing, the motor driver 111M receives input of a target rotation speed from the CPU unit 200, and controls the motor 112M accordingly. The motor 112M drives the magazine 150 to rotate in accordance with an output current from the motor driver 111M, and drives a designated next tool T1 in the magazine 150 to a designated position.

Also, the CPU unit 200 controls the drive unit 120 in accordance with a PLC program designed in advance. The drive unit 120 is a drive mechanism for driving the ATC 160. The drive unit 120 may have any device configuration. The drive unit 120 may be constituted by a single drive unit, or may be constituted by a plurality of drive units. In the example shown in FIG. 2, the drive unit 120 is constituted by an ATC driver 121A and motors 122A and 122B.

The ATC driver 121A is a two-axis integrated driver, and controls the driving of the motors 122A and 122B connected to the ATC 160, for example. The ATC 160 includes a central shaft 165 and an arm 166. The arm 166 is a double arm that can hold two tools at the same time, for example. Specifically, the arm 166 has a tool gripper 166A that extends from the central shaft 165 toward one side in the direction orthogonal to the axial direction of the central shaft 165 (e.g., toward one side in the X-axis direction), and a tool gripper 166B that extends from the central shaft 165 toward the opposite side.

The motors 122A and 122B may be a servo motor, may be a stepping motor, or may be another type of motor. For example, the ATC driver 121A receives input of a target rotation speed for the motor 122A and input of a target rotation speed for the motor 122B from the CPU unit 200, and controls the motors 122A and 122B accordingly. The motor 122A feeds the arm 166 of the ATC 160 in accordance with an output current from the ATC driver 121A, and drives the arm 166 to any position in the axial direction of the central shaft 165. The motor 122B drives the arm 166 of the ATC 160 to rotate in accordance with an output current from the ATC driver 121A, and drives the arm 166 to any rotation angle about the central shaft 165.

In one example, the ATC 160 acquires the next tool T1 from the magazine 150 based on receiving a tool exchange command. Thereafter, the ATC 160 removes a used tool T2 from the spindle 170 and mounts the next tool T1 to the spindle 170. Thereafter, the ATC 160 stores the used tool T2, which was removed from the spindle 170, in the magazine 150.

Upon receiving a machining start command from the CPU unit 200, the CNC unit 300 starts the execution of a machining program designed in advance. This machining program is written using an NC (Numerical Control) program, for example. The CNC unit 300 drives the drive unit 130 in accordance with the machining program.

The drive unit 130 is a drive mechanism for moving the spindle 170. The drive unit 130 may have any device configuration. The drive unit 130 may be constituted by a single drive unit, or may be constituted by a plurality of drive units. In the example shown in FIG. 2, the drive unit 130 is constituted by motor drivers 131B, 131C, 131X, 131Y, and 131Z, and motors 132B, 132C, 132X, 132Y, and 132Z.

The motor driver 131B successively receives input of target rotation speeds from the CNC unit 300, and controls the motor 132B accordingly. The motor 132B drives the spindle 170 to rotate around the Y-axis direction. The motor 132B may be an AC motor, may be a stepping motor, may be a servo motor, or may be another type of motor.

In the case where the motor 132B is a servo motor, the motor driver 131B calculates an actual rotation speed of the motor 132B based on a feedback signal from an encoder (not shown) for detecting the rotation angle of the motor 132B. The motor driver 131B increases the rotation speed of the motor 132B if the calculated actual rotation speed is smaller than the target rotation speed, and decreases the rotation speed of the motor 132B if the calculated actual rotation speed is larger than the target rotation speed. In this way, the motor driver 131B brings the rotation speed of the motor 132B closer to the target rotation speed while successively receiving feedback regarding the rotation speed of the motor 132B.

The motor driver 131C successively receives input of target positions from the CNC unit 300, and controls motor 132C accordingly. The motor 132C drives the spindle 170 to rotate about the axial direction of the spindle 170. The motor 132C may be an AC motor, may be a stepping motor, may be a servo motor, or may be another type of motor. The control of the motor 132C by the motor driver 131C is performed by a method similar to the control performed by the motor driver 131B, and therefore a description thereof will not be repeated.

The motor driver 131X successively receives input of target positions from the CNC unit 300, and controls the motor 132X accordingly. The motor 132X feeds the spindle 170, and moves the spindle 170 to any position in the X-axis direction. The motor 132X may be an AC motor, may be a stepping motor, may be a servo motor, or may be another type of motor. The control of the motor 132X by the motor driver 131X is performed by a method similar to the control performed by the motor driver 131B, and therefore a description thereof will not be repeated.

The motor driver 131Y successively receives input of target positions from the CNC unit 300, and controls the motor 132Y accordingly. The motor 132Y feeds the spindle 170, and moves the spindle 170 to any position in the Y-axis direction. The motor 132Y may be an AC motor, may be a stepping motor, may be a servo motor, or may be another type of motor. The control of the motor 132Y by the motor driver 131Y is performed by a method similar to the control performed by the motor driver 131B, and therefore a description thereof will not be repeated.

The motor driver 131Z successively receives input of target positions from the CNC unit 300, and controls the motor 132Z accordingly. The motor 132Z feeds the spindle 170, and moves the spindle 170 to any position in the Z-axis direction. The motor 132Z may be an AC motor, may be a stepping motor, may be a servo motor, or may be another type of motor. The control of the motor 132Z by the motor driver 131Z is performed by a method similar to the control performed by the motor driver 131B, and therefore a description thereof will not be repeated.

The information processing device 400 is a computer. For example, the information processing device 400 may be a desktop computer, may be a notebook computer, or may be tablet terminal.

A camera 180 is connected to the information processing device 400. A predetermined image processing program is installed in the information processing device 400, and the information processing device 400 detects abnormal mounting of a tool based on an input image received from the camera 180. Details of the detection processing will be described later.

### <C. HSK tooling>

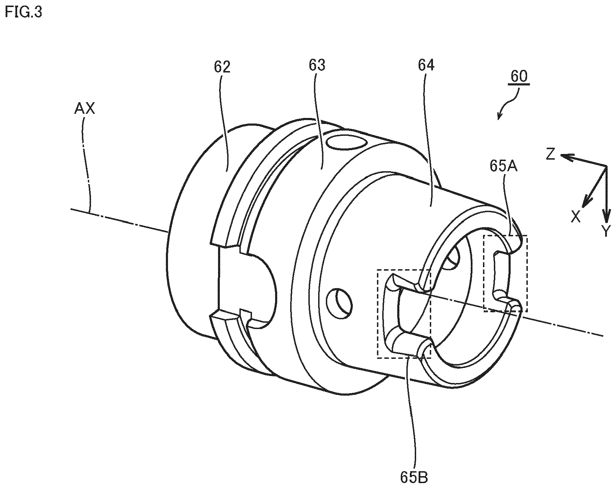

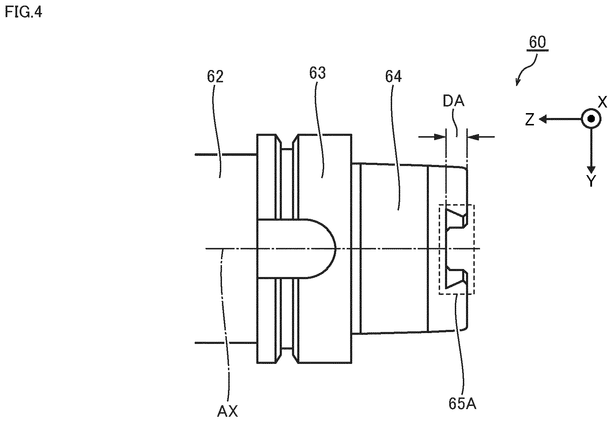

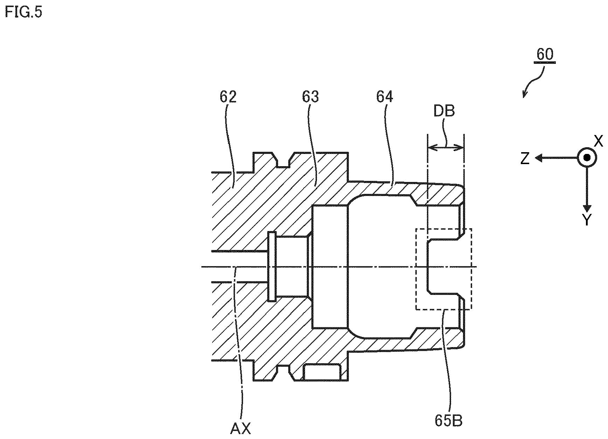

Next, the structure of an HSK tooling will be described with reference to FIGS. 3 to 5. FIG. 3 is a perspective view showing an HSK tooling 60. FIG. 4 is a side view of the HSK tooling 60 viewed from the X-axis direction shown in FIG. 3. FIG. 5 is a cross-sectional view of the HSK tooling 60 viewed from the X-axis direction shown in FIG. 3.

The HSK tooling 60 is a type of tool standard specified by the ISO (International Organization for Standardization). The HSK tooling 60 functions as a connection interface between a tool and the machine tool 100.

The HSK tooling 60 is constituted by a tool holder 62 (tool holding portion), a flange 63, and an HSK shank 64.

The tool holder 62 is configured to be able to hold a tool. The tool holder 62 is connected to one end of the flange 63.

The HSK shank 64 is connected to the other end of the flange 63. The HSK shank 64 has a hollow cylindrical portion. The inner surface and the outer surface of the cylindrical portion extend in the axial direction of a central axis AX. The axial direction of the central axis AX corresponds to the direction in which the tool is attached to and removed from the tool holder 62. Also, the HSK shank 64 has a groove 65A (first groove) having a depth "DA" in the axial direction of the central axis AX, and a groove 65B (second groove) having a depth "DB" in the axial direction of the central axis AX.

For convenience in the description, hereinafter, the direction that is parallel to the central axis AX and that is the direction in which the tool is attached to and removed from the HSK tooling 60 will also be referred to as the "Z-axis direction". Also, the direction that is orthogonal to the Z-axis direction and that is the direction from the groove 65A toward the groove 65B will also be referred to as the "X-axis direction". Moreover, the direction orthogonal to both the Z-axis direction and the X-axis direction will also be referred to as the "Y-axis direction".

The groove 65A has a recessed shape and is recessed in the Z-axis direction. Similarly, the groove 65B has a recessed shape and is recessed in the Z-axis direction. The groove 65A and the groove 65B are provided at positions opposing each other across the central axis AX at the center.

The depth "DA" of the groove 65A in the Z-axis direction is different from the depth "DB" of the groove 65B in the Z-axis direction. In the example shown in FIGS. 4 and 5, the depth "DA" of the groove 65A is shallower than the depth "DB" of the groove 65B.

### <D. Mounting of HSK tooling>

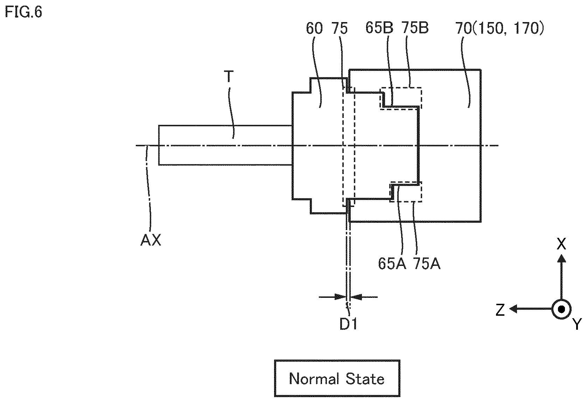

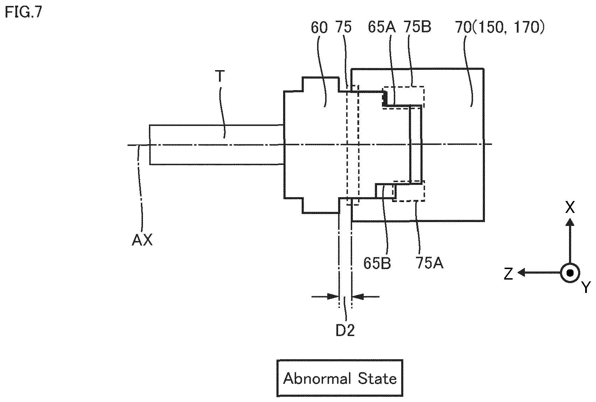

Next, an aspect of mounting of the HSK tooling 60 to the tooling holding portion 70 will be described with reference to FIGS. 6 and 7. FIGS. 6 and 7 are diagrams schematically showing an aspect of mounting of the HSK tooling 60 to the tooling holding portion 70.

As shown in FIGS. 6 and 7, the HSK tooling 60 functions as a connection interface between a tool T and the tooling holding portion 70. The "tooling holding portion 70" as used in the present specification means any unit capable of holding the HSK tooling 60. Examples of the tooling holding portion 70 include the above-described magazine 150 (see FIG. 1), the above-described ATC 160 (see FIG. 1), the above-described spindle 170 (see FIG. 1), and a tool rest (not shown).

The tooling holding portion 70 has an insertion opening 75 for the HSK tooling 60. The insertion opening 75 is formed so as to match the shape of the HSK shank 64 described above.

As described above, the HSK tooling 60 has the groove 65A that is recessed in the Z-axis direction. Correspondingly, the tooling holding portion 70 has an engaging portion 75A (first engaging portion) that engages with the groove 65A when the HSK shank 64 of the HSK tooling 60 is inserted into the insertion opening 75.

Furthermore, the HSK tooling 60 has the groove 65B that is recessed in the Z-axis direction. Correspondingly, the tooling holding portion 70 has an engaging portion 75B (second engaging portion) that engages with the groove 65B when the HSK shank 64 of the HSK tooling 60 is inserted into the insertion opening 75.

The width of the engaging portion 75A in the central axis AX direction is equivalent to the depth "DA" (see FIG. 4) of the groove 65A in the central axis AX direction. The width of the engaging portion 75B in the axial direction of the central axis AX is equivalent to the depth "DB" (see FIG. 5) of the groove 65B in the axial direction of the central axis AX. Also, the width of the engaging portion 75B in the central axis AX direction is longer than the width of the engaging portion 75A in the central axis AX direction.

As described above, the two grooves 65A and 65B provided in the HSK tooling 60 are provided at positions opposing each other across the central axis AX at the center. Also, since the difference between the depth "DA" of the groove 65A and the depth "DB" of the groove 65B is very small, the HSK tooling 60 can possibly be mounted to the tooling holding portion 70 in a state inverted 180 degrees from the intended orientation.

FIG. 6 shows a state in which the HSK tooling 60 is normally mounted to the tooling holding portion 70. As shown in FIG. 6, when the HSK tooling 60 is normally mounted to the tooling holding portion 70, the width of a gap between the HSK tooling 60 and the tooling holding portion 70 is "D1".

FIG. 7 shows a state in which the HSK tooling 60 is abnormally mounted to the tooling holding portion 70. As shown in FIG. 7, in the case where the HSK tooling 60 is mounted to the tooling holding portion 70 in an inverted state, the width of the gap between the HSK tooling 60 and the tooling holding portion 70 is "D2". The width of the gap "D2" in the abnormally mounted state is longer than the width "D 1" of the gap in the normally mounted state.

In view of this, the machine tool 100 determines whether or not the HSK tooling 60 is normally mounted to the tooling holding portion 70 based on physical information indicating the state of the gap between the HSK tooling 60 and the tooling holding portion 70. The term "physical information" as used in the present specification is a concept that includes any indicator correlated with the width of the gap between the HSK tooling 60 and the tooling holding portion 70. As one example, the physical information includes image information showing the state of the gap between the HSK tooling 60 and the tooling holding portion 70. As another example, the physical information includes distance information indicating the width of the gap between the HSK tooling 60 and the tooling holding portion 70.

In the case of determining that the HSK tooling 60 is not normally mounted to the tooling holding portion 70, the machine tool 100 executes predetermined warning processing. Accordingly, the worker can become aware that the HSK tooling 60 is abnormally mounted to the tooling holding portion 70.

### <E. Functional configuration of machine tool 100>

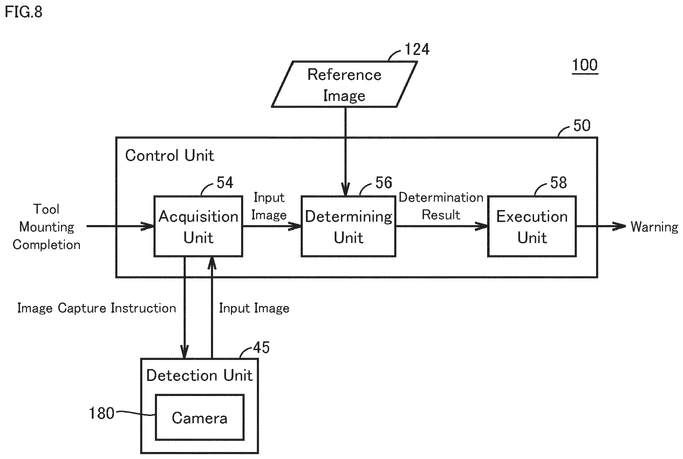

A functional configuration for detecting abnormal mounting of the HSK tooling 60 will be described below with reference to FIGS. 8 to 10. FIG. 8 is a diagram showing an example of the functional configuration of the machine tool 100.

The control unit 50 of the machine tool 100 includes an acquisition unit 54, a determining unit 56, and an execution unit 58 as functional components. These configurations will be described below in order.

Note that the functional components shown in FIG. 8 can be implemented in any unit constituting the control unit 50. In one example, some or all of the functional components shown in FIG. 8 are implemented in the above-described CPU unit 200 (see FIG. 2). In another example, some or all of the functional components shown in FIG. 8 are implemented in the above-described CNC unit 300 (see FIG. 2). In another example, some or all of the functional components shown in FIG. 8 are implemented in the above-described information processing device 400 (see FIG. 2). In another example, some or all of the functional components shown in FIG. 8 are implemented in the above-described operation panel 500 (see FIG. 1).

Note that some of the functional components shown in FIG. 8 may be implemented in an external device such as a server, or may be implemented in dedicated hardware.

### (E1. Acquisition unit 54)

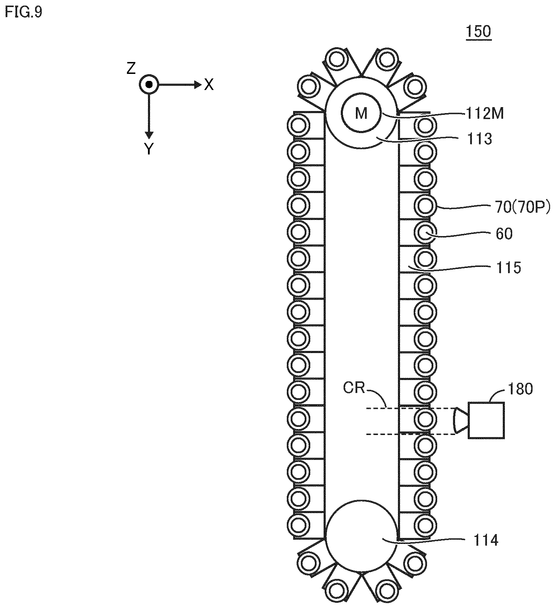

First, functions of the acquisition unit 54 shown in FIG. 8 will be described with reference to FIG. 9. FIG. 9 is a diagram showing the magazine 150 from the front. In one example, the acquisition unit 54 is implemented in the information processing device 400 (see FIG. 2).

While the HSK tooling 60 is mounted to the tooling holding portion 70, the acquisition unit 54 acquires physical information indicating the state of the gap between the HSK tooling 60 and the tooling holding portion 70 from a detection unit 45. In FIG. 8, the camera 180 is shown as an example of the detection unit 45.

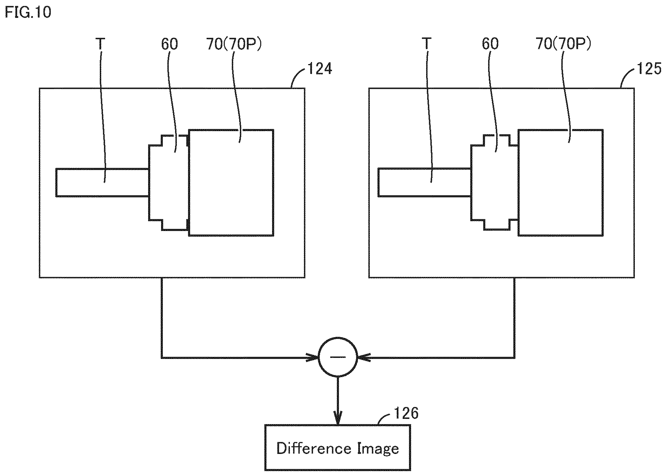

The acquisition unit 54 outputs an image capture instruction to the camera 180 at least at one timing while the HSK tooling 60 is mounted to the tooling holding portion 70. As a result, the acquisition unit 54 acquires, from the camera 180, a later-described input image 125 (see FIG. 10) showing the mounted portion between the HSK tooling 60 and the tooling holding portion 70, as the physical information.

The camera 180 is provided to capture images of the magazine 150 in the tool storage unit 40A (see FIG. 1), for example. The magazine 150 includes a motor 112M, a driving sprocket 113, a driven sprocket 114, and an endless chain 115.

The driving sprocket 113 is coupled to the output shaft of the above-described motor 112M (see FIG. 2). The driving sprocket 113 rotates while receiving motive power transmitted from the motor 112M.

The endless chain 115 is wound around the driving sprocket 113 and the driven sprocket 114. As the motor 112M drives the driving sprocket 113 to rotate, motive power from the motor 112M is transmitted to the driven sprocket 114 via the endless chain 115. As a result, the driven sprocket 114 and the endless chain 115 rotate in conjunction with the driving sprocket 113.

Also, the endless chain 115 is provided with a plurality of pots 70P. The pots 70P are each an example of the above-described tooling holding portion 70 (see FIG. 6). One HSK tooling 60 can be mounted in each of the pots 70P. The machine tool 100 can drive a designated tool to any position by controlling the motor 112M.

A worker can mount the HSK tooling 60 to the magazine 150. As a specific mounting procedure, the worker calls a pot 70P, and the machine tool 100 accordingly drives an empty pot 70P to a position in front of the above-described door D1. The worker then opens the door D1 and mounts the HSK tooling 60 to the empty pot 70P. The worker then closes the door D1.

After the worker has mounted the HSK tooling 60 to the pot 70P, the acquisition unit 54 outputs an image capture instruction to the camera 180, and acquires a later-described input image 125 showing the mounted portion between the HSK tooling 60 and the pot 70P.

The camera 180 is provided in the tool storage unit 40A (see FIG. 1) such that the gap between the HSK tooling 60 and the pot 70P is included in a field of view CR of the camera 180. Accordingly, the camera 180 acquires image information indicating the state of the gap between the HSK tooling 60 and the pot 70P.

An image capture instruction is output to the camera 180 at any timing while the HSK tooling 60 is mounted to the tooling holding portion 70. Typically, an image capture instruction is output at the timing when the worker mounts the HSK tooling 60 to the pot 70P.

More specifically, the door D1 (see FIG. 1) of the machine tool 100 is provided with an open/closed sensor (not shown). After the HSK tooling 60 is mounted to a pot 70P, the worker closes the door D1. Accordingly, in the case where the output value of the open/closed sensor changes from a value indicating the open state of the door D1 to a value indicating the closed state of the door D1, the acquisition unit 54 outputs an image capture instruction to the camera 180.

In another example, the machine tool 100 is provided with a tool mounting completion button (not shown). After the HSK tooling 60 is mounted to the pot 70P, the worker presses the mounting completion button. Therefore, based on the pressing of the mounting completion button, the acquisition unit 54 outputs an image capture instruction to the camera 180.

Note that although the above example has been described on the assumption that the camera 180 is provided inside the tool storage unit 40A, the camera 180 does not necessarily need to be provided inside the tool storage unit 40A. For example, the camera 180 may be provided inside the machining body 40B. In this case, the control unit 50 drives the above-described drive unit 130 to move the spindle 170, to which the HSK tooling 60 is mounted, to a position in front of the camera 180. The spindle 170 is an example of the above-described tooling holding portion 70 (see FIG. 6). The acquisition unit 54 then outputs an image capture instruction to the camera 180 and acquires an input image 125 showing the mounted portion between the HSK tooling 60 and the tooling holding portion 70.

As another example, the camera 180 may be provided so as to capture images of a tool rest (not shown) in the machine tool 100. The tool rest is an example of the tooling holding portion 70 (see FIG. 6) described above. The tool rest has a turret. The turret is configured such that a plurality of HSK toolings 60 can be mounted thereto. The turret is configured to be able to rotate, and a HSK tooling 60 is rotated to a predetermined position when performing workpiece machining. When a HSK tooling 60 is mounted to the tool rest, the control unit 50 moves the HSK tooling 60 to a position in front of the camera 180. The acquisition unit 54 then outputs an image capture instruction to the camera 180 and acquires an input image 125 showing the mounted portion between the HSK tooling 60 and the tooling holding portion 70.

### (E2. Determining unit 56)

Next, functions of the determining unit 56 shown in FIG. 8 will be described with reference to FIG. 10. In one example, the determining unit 56 is implemented in the information processing device 400 (see FIG. 2).

FIG. 10 is a conceptual diagram schematically showing processing for detecting abnormal mounting of the HSK tooling 60. A reference image 124 and an input image 125 are shown in FIG. 10. The determining unit 56 compares the input image 125 acquired by the acquisition unit 54 with the reference image 124, and determines whether or not the HSK tooling 60 is normally mounted to the tooling holding portion 70.

The reference image 124 is an image of the HSK tooling 60 obtained in advance while the HSK tooling 60 is normally mounted to the tooling holding portion 70. The reference image 124 is stored in advance in a storage device of the machine tool 100, for example.

In one example, the determining unit 56 generates a difference image 126 by subtracting the reference image 124 from the input image 125. The determining unit 56 then determines whether or not the HSK tooling 60 is normally mounted to the tooling holding portion 70 based on the difference image 126.

More specifically, first, the determining unit 56 assigns "0" (black) to pixels whose pixel value is less than or equal to a threshold value th in the difference image 126, and assigns "255" (white) to pixels whose pixel value is greater than the threshold value th in the difference image 126. The determining unit 56 thus generates a binarized image from the difference image 126. Thereafter, the determining unit 56 counts the number of pixels having a pixel value of "0", and if the count value is greater than or equal to a predetermined value, it is determined that the HSK tooling 60 is normally mounted to the tooling holding portion 70. On the other hand, if the count value is less than the predetermined value, the determining unit 56 determines that the HSK tooling 60 is abnormally mounted to the tooling holding portion 70.

Note that the determining unit 56 does not necessarily need to use the reference image 124 when detecting abnormal mounting of the HSK tooling 60. Various image processing algorithms may be used for the detection processing. In one example, the determining unit 56 detects abnormal mounting of the HSK tooling 60 using a trained model.

The trained model is generated in advance by learning processing performed using a training data set. The training data set includes a plurality of training images showing mounting states of the HSK tooling 60 and the tooling holding portion 70. Each training image is associated with a label indicating whether or not the HSK tooling 60 is normally mounted to the tooling holding portion 70. The internal parameters of the trained model have been optimized in advance through training processing performed using such a training data set.

Various machine learning algorithms can be adopted as the training method for generating the trained model. For example, deep learning, a convolutional neural network (CNN), a full-layer convolutional neural network (FCN), a support vector machine, or the like is adopted as the machine learning algorithm.

Upon acquiring the input image 125 from the camera 180, the determining unit 56 inputs the input image 125 to the trained model. As a result, the trained model outputs a probability that the HSK tooling 60 is abnormally mounted. If the probability exceeds a predetermined value, the determining unit 56 determines that the HSK tooling 60 is abnormally mounted to the tooling holding portion 70.

### (E3. Execution unit 58)

Next, functions of the execution unit 58 shown in FIG. 8 will be described. The execution unit 58 is implemented in the information processing device 400 described above or the operation panel 500 described above, for example.

The execution unit 58 executes predetermined warning processing in the case where the determining unit 56 determines that the HSK tooling 60 is abnormally mounted to the tooling holding portion 70. The warning processing is processing for notifying the worker that the HSK tooling 60 is abnormally mounted to the tooling holding portion 70.

In one example, the execution unit 58 displays a warning indicating abnormal mounting of the HSK tooling 60 on the display 505 of the operation panel 500. This warning includes a message prompting the worker to invert the HSK tooling 60 by 180 degrees and remount it to the tooling holding portion 70, for example. The worker can thus easily understand how to remount the HSK tooling 60 to the tooling holding portion 70.

Note that, in the above description, an example has been described in which a warning indicating abnormal mounting is displayed on the display 505 of the operation panel 500, but the warning may be displayed by another display unit. Also, the mode in which the warning is output is not limited to display. In one example, the warning may be output as a sound such as a buzzer sound or speech. Alternatively, the warning may be sent to another device by an electronic message or the like.

### <F. Hardware configuration of CPU unit 200>

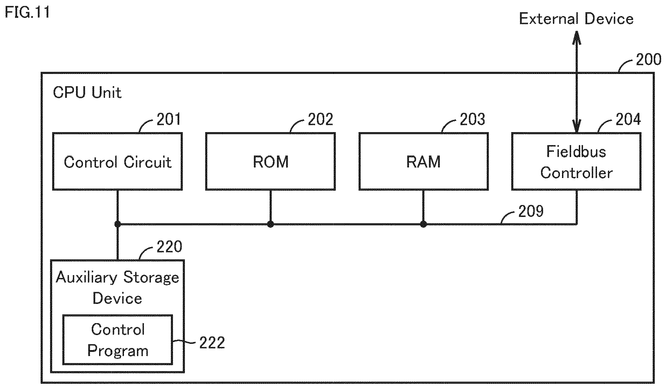

The hardware configuration of the above-described CPU unit 200 shown in FIG. 2 will be described below with reference to FIG. 11. FIG. 11 is a diagram showing an example of the hardware configuration of the CPU unit 200.

The CPU unit 200 includes a control circuit 201, a ROM (Read Only Memory) 202, a RAM (Random Access Memory) 203, a fieldbus controller 204, and an auxiliary storage device 220. These components are connected to an internal bus 209.

The control circuit 201 is constituted by at least one integrated circuit, for example. An integrated circuit may be constituted by at least one CPU, at least one GPU (Graphics Processing Unit), at least one ASIC (Application Specific Integrated Circuit), at least one FPGA (Field Programmable Gate Array), or a combination thereof, for example.

The control circuit 201 controls the operation of the CPU unit 200 by executing various programs, such as a control program 222. Upon receiving an execution command for the control program 222, the control circuit 201 reads the control program 222 from the auxiliary storage device 220 or the ROM 202 to the RAM 203. The RAM 203 functions as a working memory and temporarily stores various types of data necessary for executing the control program 222.

The fieldbus controller 204 is a communication unit for realizing communication with various units connected to the fieldbus. Examples of communication standards that can be adopted for the field network include EtherCAT (registered trademark), EtherNet/IP (registered trademark), CC-Link (registered trademark), and CompoNet (registered trademark). Examples of units connected to the fieldbus include the motor driver 111M, the ATC driver 121A, and the CNC unit 300 that are described above.

The auxiliary storage device 220 is a storage medium such as a hard disk or a flash memory, for example. The auxiliary storage device 220 stores the control program 222 and the like. Note that the control program 222 is not limited to being stored in the auxiliary storage device 220, and can also be stored in a storage area (e.g., a cache memory) of the control circuit 201, the ROM 202, the RAM 203, an external device (e.g., a server), or the like.

Furthermore, rather than being a standalone program, the control program 222 may be provided as part of a program. In this case, various types of processing pertaining to the present embodiment are realized in cooperation with the program. Even if the program does not include such a portion of modules, the program does not depart from the spirit of the control program 222 pertaining to the present embodiment. Also, some or all of the functions provided by the control program 222 may be realized by dedicated hardware. Furthermore, the CPU unit 200 may be configured in a mode such as a so-called cloud service in which at least one server executes a part of the processing of the control program 222.

### <G. Hardware configuration of CNC unit 300>

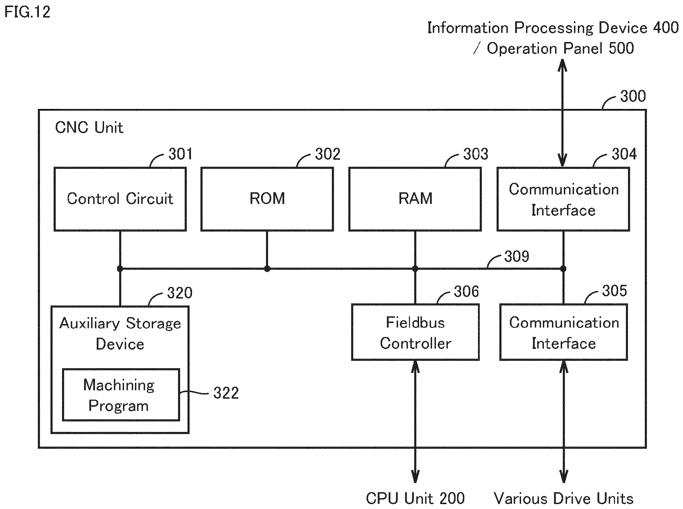

Next, the hardware configuration of the above-described CNC unit 300 shown in FIG. 2 will be described with reference to FIG. 12. FIG. 12 is a diagram showing an example of the hardware configuration of the CNC unit 300.

The CNC unit 300 includes a control circuit 301, a ROM 302, a RAM 303, a communication interface 304, a communication interface 305, a fieldbus controller 306, and an auxiliary storage device 320. These components are connected to an internal bus 309.

The control circuit 301 is constituted by at least one integrated circuit, for example. An integrated circuit may be constituted by at least one CPU, at least one GPU, at least one ASIC, at least one FPGA, or a combination thereof, for example.

The control circuit 301 controls the operation of the CNC unit 300 by executing various programs, such as a machining program 322. The machining program 322 is a program for realizing workpiece machining. Upon receiving an execution command for the machining program 322, the control circuit 301 reads the machining program 322 from the ROM 302 to the RAM 303. The RAM 303 functions as a working memory and temporarily stores various types of data necessary for executing the machining program 322.

A LAN, a WLAN, Bluetooth (registered trademark), or the like is connected to the communication interface 304. The CNC unit 300 exchanges data with an external device via the communication interface 304. Examples of the external device include the above-described information processing device 400, the operation panel 500, and a server (not shown).

The communication interface 305 is an interface for realizing communication with an external device. In one example, the CNC unit 300 exchanges data with an external device via the communication interface 305. Examples of the external device include various drive units for workpiece machining (e.g., the above-described motor drivers 131B, 131C, and 131X to 131Z).

The fieldbus controller 306 is a communication unit for realizing communication with various units connected to a fieldbus. Examples of communication standards that can be adopted for the field network include EtherCAT, EtherNet/IP, CC-Link, and CompoNet. One example of a unit connected to the fieldbus is the CPU unit 200.

The auxiliary storage device 320 is a storage medium such as a hard disk or a flash memory, for example. The auxiliary storage device 320 stores the machining program 322 and the like. Note that the machining program 322 is not limited to being stored in the auxiliary storage device 320, and can also be stored in a storage area (e.g., a cache memory) of the control circuit 301, the ROM 302, the RAM 303, an external device (e.g., a server), or the like.

### <H. Hardware configuration of information processing device 400>

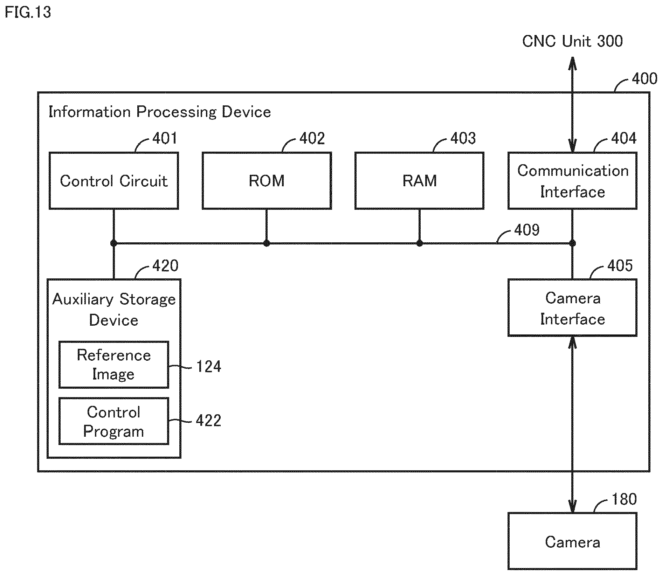

Next, the hardware configuration of the information processing device 400 shown in FIG. 2 will be described with reference to FIG. 13. FIG. 13 is a diagram showing an example of the hardware configuration of the information processing device 400.

The information processing device 400 includes a control circuit 401, a ROM 402, a RAM 403, a communication interface 404, a camera interface 405, and an auxiliary storage device 420. These components are connected to an internal bus 409.

The control circuit 401 is constituted by at least one integrated circuit, for example. An integrated circuit may be constituted by at least one CPU, at least one GPU, at least one ASIC, at least one FPGA, or a combination thereof, for example.

The control circuit 401 controls the operation of the information processing device 400 by executing various programs, such as a control program 422 for detecting abnormal mounting of the HSK tooling 60. Upon receiving an execution command for any of various program, the control circuit 401 reads the program to be executed from the auxiliary storage device 420 or the ROM 402 to the RAM 403. The RAM 403 functions as a working memory and temporarily stores various types of data necessary for program execution.

The communication interface 404 is an interface for realizing communication using a LAN, a WLAN, Bluetooth, or the like. The information processing device 400 exchanges data with an external device (e.g., the CNC unit 300 or a server) via the communication interface 404. The information processing device 400 may be configured to be able to download the control program 422 via the communication interface 404.

The camera interface 405 is an interface for connecting to the camera 180 by wire or wirelessly. The camera 180 may be a CCD (Charge Coupled Device) camera, an infrared camera (thermography), or another type of camera.

The auxiliary storage device 420 is a storage medium such as a hard disk or a flash memory, for example. The auxiliary storage device 420 stores the above-described reference image 124 and the control program 422, for example. Note that the reference image 124 and the control program 422 are not limited to being stored in the auxiliary storage device 420, and can also be stored in a storage area (e.g., a cache memory) of the control circuit 401, the ROM 402, the RAM 403, an external device (e.g., a server), or the like.

Note that rather than being a standalone program, the control program 422 may be provided as part of a program. In this case, processing pertaining to the present embodiment is realized in cooperation with the program. Even if the program does not include such a portion of modules, the program does not depart from the spirit of the machine tool 100 pertaining to the present embodiment. Also, some or all of the functions provided by the control program 422 pertaining to the present embodiment may be realized by dedicated hardware. Furthermore, processing pertaining to the present embodiment may be realized by cooperation between the machine tool 100 and a server. Furthermore, the information processing device 400 may be configured in a mode such as a so-called cloud service in which at least one server implements processing according to the present embodiment.

### <I. Hardware configuration of operation panel 500>

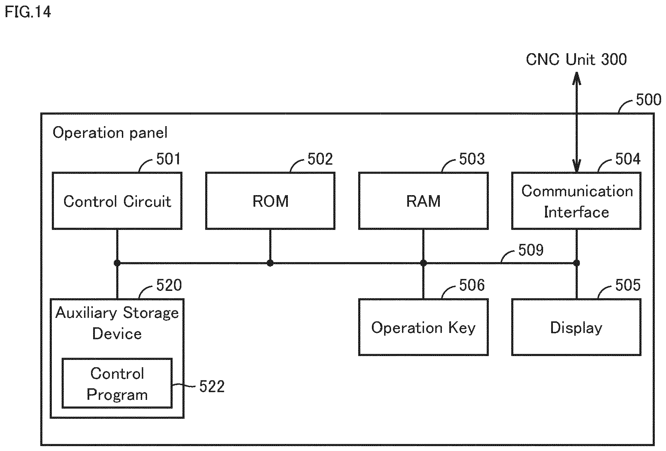

Next, the hardware configuration of the operation panel 500 shown in FIG. 2 will be described with reference to FIG. 14. FIG. 14 is a diagram showing an example of the hardware configuration of the operation panel 500.

The operation panel 500 includes a control circuit 501, a ROM (Read Only Memory) 502, a RAM (Random Access Memory) 503, a communication interface 504, a display 505, operation keys 506, and an auxiliary storage device 520. These components are connected to an internal bus 509.

The control circuit 501 is configured by at least one integrated circuit, for example. An integrated circuit may be comprised of at least one CPU, at least one GPU, at least one ASIC, at least one FPGA, or a combination thereof, for example.

The control circuit 501 controls the operation of the operation panel 500 by executing various programs, such as a control program 522. The control program 522 defines commands for controlling the operation panel 500. Upon receiving an execution command for the control program 522, the control circuit 501 reads the control program 522 from the auxiliary storage device 520 or the ROM 502 to the RAM 503. The RAM 503 functions as a working memory and temporarily stores various types of data necessary for executing the control program 522.

The communication interface 504 is a communication unit for realizing communication using a LAN (Local Area Network) cable, a WLAN, Bluetooth, or the like. In one example, the operation panel 500 realizes communication with an external device such as the above-described CNC unit 300 via the communication interface 504.

The display 505 is a liquid crystal display, an organic EL display, or another display device, for example. The display 505 transmits an image signal for displaying an image to the display 505 in accordance with a command from the control circuit 501 or the like. The display 505 is constituted by a touch panel, for example, and receives various operations performed on the machine tool 100 through touch operations.

The operation keys 506 are constituted by a plurality of hardware keys, and receive various user operations performed on the operation panel 500. Signals corresponding to pressed keys are output to control circuit 501.

The auxiliary storage device 520 is a storage medium such as a hard disk or a flash memory, for example. The auxiliary storage device 520 stores the control program 522 and the like. Note that the control program 522 is not limited to being stored in the auxiliary storage device 520, and can also be stored in a storage area (e.g., a cache memory) of the control circuit 501, the ROM 502, the RAM 503, an external device (e.g., a server), or the like.

### <J. Flowchart>

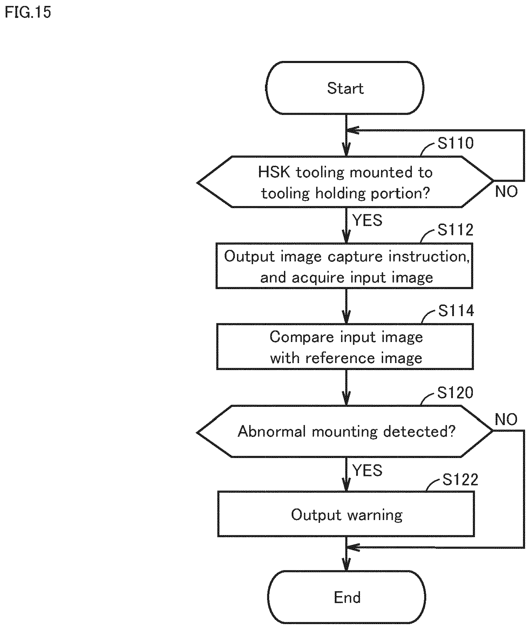

Next, the control structure of the machine tool 100 will be described with reference to FIG. 15. FIG. 15 is a flowchart showing part of the processing executed by the control unit 50 of the machine tool 100.

The processing shown in FIG. 15 is realized by the control unit 50 executing a control program (e.g., the above-described control program 422 or the above-described control program 522). In other aspects, some or all of the processing may be executed by circuit elements or other hardware.

In step S110, the control unit 50 determines whether or not an HSK tooling 60 has been mounted to the tooling holding portion 70. Various methods can be used to determine whether or not an HSK tooling 60 has been mounted to the tooling holding portion 70.

In one example, the door D1 (see FIG. 1) of the machine tool 100 is provided with an open/closed sensor (not shown). Upon completing the mounting of the HSK tooling 60 to the tooling holding portion 70, the worker closes the door D1. In view of this, in the case where the output value of the open/closed sensor changes from a value indicating the open state of the door D1 to a value indicating the closed state of the door D1, the control unit 50 determines that an HSK tooling 60 has been mounted to the tooling holding portion 70.

In another example, the machine tool 100 includes a mounting completion button (not shown). Upon completing the mounting of the HSK tooling 60 to the tooling holding portion 70, the worker presses the mounting completion button. Based on the fact that the mounting completion button was pressed, the control unit 50 determines that the HSK tooling 60 was mounted to the tooling holding portion 70.

Upon determining that the HSK tooling 60 was mounted to the tooling holding portion 70 (YES in step S110), the control unit 50 switches the control to step S112. In the other case (NO in step S110), the control unit 50 executes the processing of step S110 again.

In step S112, the control unit 50 functions as the above-described acquisition unit 54 (see FIG. 8) and outputs an image capture instruction to the above-described camera 180. Thereby, the control unit 50 acquires the above-described input image 125 (see FIG. 10) show the mounting portion between the HSK tooling 60 and the tooling holding portion 70.

In step S114, the control unit 50 compares the input image 125 acquired in step S112 with the reference image 124. The reference image 124 and the input image 125 are compared by the method described above with reference to FIG. 10 and the like, and thus the description thereof will not be repeated.

In step S120, the control unit 50 functions as the above-described determining unit 56 (see FIG. 8), and determines whether or not the HSK tooling 60 is abnormally mounted to the tooling holding portion 70 based on the comparison result in step S114. Upon determining that the HSK tooling 60 is abnormally mounted to the tooling holding portion 70 (YES in step S120), the control unit 50 switches the control to step S122. In the other case (NO in step S120), the control unit 50 ends the processing shown in FIG. 15.

In step S122, the control unit 50 functions as the above-described execution unit 58 (see FIG. 8) and executes predetermined warning processing. For example, the control unit 50 displays a warning indicating abnormal mounting of the HSK tooling 60 on the display 505 of the operation panel 500. This warning includes a message prompting the worker to invert the HSK tooling 60 by 180 degrees and remount it to the tooling holding portion 70, for example.

### <K. Variation>

### (K1. Overview)

Next, a variation of the method for detecting abnormal mounting of the HSK tooling 60 will be described.

In the above description, the machine tool 100 detects abnormal mounting of the HSK tooling 60 to the tooling holding portion 70 by using the camera 180 to capture an image of the state of the gap between the HSK tooling 60 and the tooling holding portion 70. Alternatively, the machine tool 100 according to this variation detects abnormal mounting of the HSK tooling 60 to the tooling holding portion 70 with use of a position sensor for detecting physical information correlated with the width of the gap between the HSK tooling 60 and the tooling holding portion 70. Since aspects other than the point of using the position sensor are as described above, the description of aspects other than that will not be repeated below.

### (K2. Mounted state of HSK tooling)

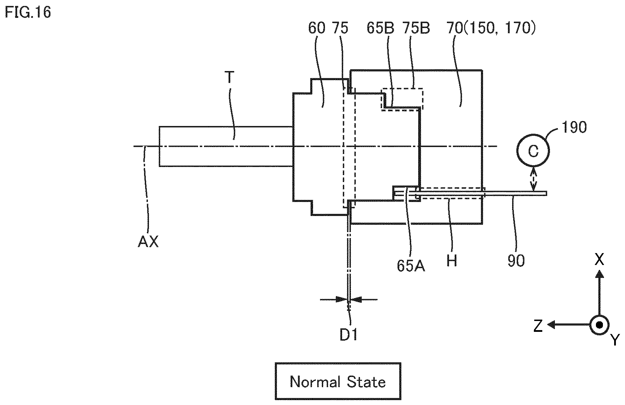

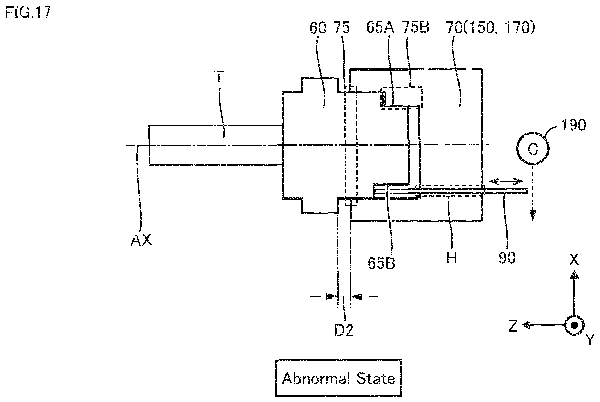

First, aspects of mounting of the HSK tooling 60 to the tooling holding portion 70 will be described with reference to FIGS. 16 and 17. FIGS. 16 and 17 are diagrams schematically showing aspects of mounting of the HSK tooling 60 to the tooling holding portion 70.

The tooling holding portion 70 according to this variation includes an interlocking member 90 that interlocks with the HSK shank 64 when the HSK shank 64 is inserted into the insertion opening 75. The interlocking member 90 is provided in the tooling holding portion 70 so as to be able to move in the axial direction relative to the central axis AX. For example, the interlocking member 90 is a pin extending in the axial direction of the central axis AX.

The tooling holding portion 70 includes a hole H. The hole H extends in the axial direction of the central axis AX. The interlocking member 90 is provided in the tooling holding portion 70 so as to pass through the hole H.

FIG. 16 shows an aspect in which the HSK tooling 60 is normally mounted to the tooling holding portion 70. When the HSK tooling 60 is normally mounted to the tooling holding portion 70, the groove 65A comes into contact with the interlocking member 90, and the groove 65B comes into contact with the engaging portion 75B. As a result, the interlocking member 90 is pushed in the insertion direction of the HSK tooling 60 (i.e., in the axial direction of the central axis AX) by the groove 65A.

FIG. 17 shows an aspect in which the HSK tooling 60 is abnormally mounted to the tooling holding portion 70. When the HSK tooling 60 is abnormally mounted to the tooling holding portion 70, the groove 65A comes into contact with the engaging portion 75B, and the groove 65B comes into contact with the interlocking member 90. As a result, the interlocking member 90 is pushed in the insertion direction of the HSK tooling 60 (i.e., in the axial direction of the central axis AX) by the groove 65B.

The amount by which the interlocking member 90 moves when the HSK tooling 60 is inserted into the tooling holding portion 70 is correlated with the width of the gap between the HSK tooling 60 and the tooling holding portion 70. Therefore, the amount of movement can serve as an indicator for determining whether or not the HSK tooling 60 is normally mounted to the tooling holding portion 70.

In view of this, the machine tool 100 according to this variation uses the position sensor 190 to detect the amount of movement of the interlocking member 90 when the HSK tooling 60 is mounted to the tooling holding portion 70. The position sensor 190 detects the position of the interlocking member 90 as physical information indicating the state of the gap between the HSK tooling 60 and the tooling holding portion 70.

Note that there are no particular limitations on the type of the position sensor 190. Any sensor capable of specifying the position of interlocking member 90 in at least two stages may be employed as the position sensor 190. In one example, the position sensor 190 is a non-contact proximity sensor that can detect the presence or absence of an object within a detectable range. In another example, the position sensor 190 may be a contact-type switch capable of detecting contact with the interlocking member 90. In another example, the position sensor 190 may be a distance sensor capable of detecting the distance to the interlocking member 90.

FIGS. 16 and 17 show a non-contact proximity sensor as an example of the position sensor 190. The position sensor 190 is provided in the tooling holding portion 70 such that when the HSK tooling 60 is mounted to the tooling holding portion 70, the interlocking member 90 moves into or out of the detectable range of the position sensor 190.

More specifically, when the HSK tooling 60 is normally inserted into the tooling holding portion 70, the interlocking member 90 moves from outside the detectable range of the position sensor 190 to a position within the detectable range of the position sensor 190. On the other hand, when the HSK tooling 60 is abnormally mounted to the tooling holding portion 70, the interlocking member 90 does not move to a position within the detectable range of the position sensor 190. Accordingly, the machine tool 10 can detect abnormal mounting of the HSK tooling 60 based on the output value of the position sensor 190.

### (K3. Functional configuration)

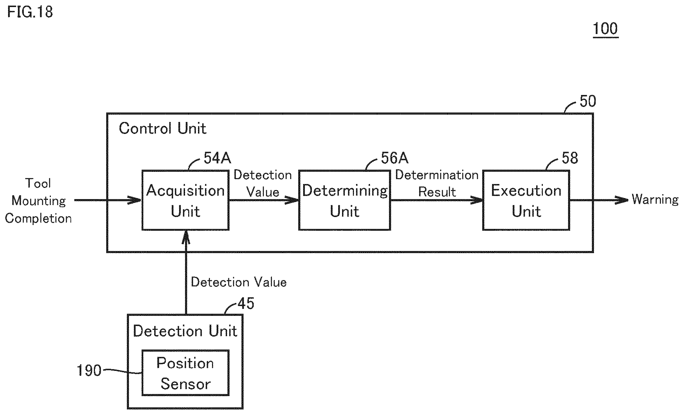

Next, the functional configuration of the machine tool 100 according to a variation will be described with reference to FIG. 18. FIG. 18 is a diagram showing an example of the functional configuration of the machine tool 100 according to a variation.

As shown in FIG. 18, the control unit 50 of the machine tool 100 includes an acquisition unit 54A, a determining unit 56A, and the execution unit 58 as functional components. The functional configuration shown in FIG. 18 is different from the functional configuration shown in FIG. 8 in that the acquisition unit 54A is provided in place of the acquisition unit 54, and the determining unit 56A is provided in place of the determining unit 56. Since the functions of the execution unit 58 are as described above, the description thereof will not be repeated below.

### (a) Acquisition unit 54A

First, functions of the acquisition unit 54A shown in FIG. 18 will be described. In one example, the acquisition unit 54A is implemented in the information processing device 400 (see FIG. 2).

The acquisition unit 54 acquires physical information indicating the state of the gap between the HSK tooling 60 and the tooling holding portion 70 from the detection unit 45. In FIG. 18, the above-described position sensor 190 is shown as an example of the detection unit 45. The position sensor 190 detects, as the physical information, a detection value indicating the state of the gap between the HSK tooling 60 and the tooling holding portion 70.

The acquisition unit 54A may acquire the detection value of the position sensor 190 at any timing. Typically, the acquisition unit 54A acquires the detection value from the position sensor 190 when the worker has mounted the HSK tooling 60 to the tooling holding portion 70.

More specifically, the door D1 (see FIG. 1) of the machine tool 100 is provided with an open/closed sensor (not shown). Upon completing the mounting of the HSK tooling 60 to the tooling holding portion 70, the worker closes the door D1. Accordingly, in the case where the output value of the open/closed sensor changes from a value indicating the open state of the door D1 to a value indicating the closed state of the door D1, the acquisition unit 54A acquires the detection value from the position sensor 190.

In another example, the machine tool 100 includes a mounting completion button (not shown). Upon completing the mounting of the HSK tooling 60 to the tooling holding portion 70, the worker presses the mounting completion button. Therefore, based on the pressing of the mounting completion button, the acquisition unit 54A acquires the detection value from the position sensor 190.

### (b) Determining unit 56A

Next, functions of the determining unit 56A shown in FIG. 18 will be described. In one example, the determining unit 56A is implemented in the information processing device 400 (see FIG. 2).

In the case where the detection value of the position sensor 190 indicates that the width of the gap between the HSK tooling 60 and the tooling holding portion 70 is greater than or equal to a predetermined value, the determining unit 56A determines that the HSK tooling 60 is abnormally mounted to the tooling holding portion 70.

The abnormal mounting determination algorithm used by the determining unit 56A is designed according to the type of the position sensor 190. For example, assume that the position sensor 190 is a proximity sensor that indicates the presence or absence of an object using binary values. In this case, if the output value of the position sensor 190 is "0", that indicates that the interlocking member 90 is not located at a position in front of the position sensor 190. On the other hand, if the output value of the position sensor 190 is "1", that indicates that the interlocking member 90 is located at a position in front of the position sensor 190.

In view of this, if the detection value of the position sensor 190 is "0" when the HSK tooling 60 is mounted to the tooling holding portion 70, the determining unit 56A determines that the HSK tooling 60 is abnormally mounted to the tooling holding portion 70. On the other hand, if the detection value of the position sensor 190 is "1" when the HSK tooling 60 is mounted to the tooling holding portion 70, the determining unit 56A determines that the HSK tooling 60 is normally mounted to the tooling holding portion 70.

In another example, assume that the position sensor 190 is a distance sensor that outputs the distance to an object. In this case, if the output value of the position sensor 190 is greater than or equal to the predetermined value, that indicates that the interlocking member 90 is not located at a position in front of the position sensor 190. On the other hand, if the output value of the position sensor 190 is less than the predetermined value, that indicates that the interlocking member 90 is located at a position in front of the position sensor 190.

In view of this, if the detection value of the position sensor 190 is greater than or equal to the predetermined value when the HSK tooling 60 is mounted to the tooling holding portion 70, the determining unit 56A determines that the HSK tooling 60 is abnormally mounted to the tooling holding portion 70. On the other hand, if the detection value of the position sensor 190 is less than the predetermined value when the HSK tooling 60 is mounted to the tooling holding portion 70, the determining unit 56A determines that the HSK tooling 60 is normally mounted to the tooling holding portion 70.

### <L. Summary>

As described above, while the HSK tooling 60 is mounted to the tooling holding portion 70, the machine tool 100 acquires physical information indicating the state of the gap between the HSK tooling 60 and the tooling holding portion 70 from the detection unit 45. Based on that physical information, the machine tool 100 determines whether or not the HSK tooling 60 is normally mounted to the tooling holding portion 70. If the HSK tooling 60 is not normally mounted to the tooling holding portion 70, the machine tool 100 executes predetermined warning processing. Accordingly, the worker can become aware that the HSK tooling 60 is abnormally mounted to the tooling holding portion 70.

The embodiments disclosed herein are intended to be considered to be illustrative in all respects and not restrictive. The scope of the present invention is indicated by the claims rather than the above description, and it is intended that equivalent meanings and all changes within the scope of the claims are included.

### List of Reference Numerals

- 10: Machine tool
- 40A: Tool storage unit
- 40B: Machining body
- 45: Detection unit
- 50: Control unit
- 54: Acquisition unit
- 54A: Acquisition unit
- 56: Determining unit
- 56A: Determining unit
- 58: Execution unit
- 60: HSK tooling
- 62: Tool holder
- 63: Flange
- 64: HSK shank
- 65A: Groove
- 65B: Groove
- 70: Tooling holding portion
- 70P: Pot
- 75: Insertion opening
- 75A: Engaging portion
- 75B: Engaging portion
- 90: Interlocking member
- 100: Machine tool
- 110: Drive unit
- 111M: Motor driver
- 112M: Motor
- 113: Driving sprocket
- 114: Driven sprocket
- 115: Endless chain
- 120: Drive unit
- 121A: ATC driver
- 122A: Motor
- 122B: Motor
- 124: Reference image
- 125: Input image
- 126: Difference image
- 130: Drive unit
- 131B: Motor driver
- 131C: Motor driver
- 131X: Motor driver
- 131Y: Motor driver
- 131Z: Motor driver
- 132B: Motor
- 132C: Motor
- 132X: Motor
- 132Y: Motor
- 132Z: Motor
- 150: Magazine
- 165: Central shaft
- 166: Arm
- 166A: Tool gripper
- 166B: Tool gripper
- 170: Spindle
- 180: Camera
- 190: Position sensor
- 200: CPU unit
- 201: Control circuit
- 202: ROM
- 203: RAM
- 204: Fieldbus controller
- 209: Internal bus
- 220: Auxiliary storage device
- 222: Control program
- 300: CNC unit
- 301: Control circuit
- 302: ROM
- 303: RAM
- 304: Communication interface
- 305: Communication interface
- 306: Fieldbus controller
- 309: Internal bus
- 320: Auxiliary storage device
- 322: Machining program
- 400: Information processing device
- 401: Control circuit
- 402: ROM
- 403: RAM
- 404: Communication interface
- 405: Camera interface
- 409: Internal bus
- 420: Auxiliary storage device
- 422: Control program
- 500: Operation panel
- 501: Control circuit
- 502: ROM
- 503: RAM
- 504: Communication interface
- 505: Display
- 506: Operation key
- 509: Internal bus
- 520: Auxiliary storage device
- 522: Control program

## Claims

1. A machine tool comprising:
a tooling holding portion having an insertion opening for a tooling,
the tooling including
a tool holding portion configured to hold a tool, and
an HSK shank configured to be inserted into the insertion opening, the machine tool further comprising:
a detection unit configured to detect physical information indicating a state of a gap between the tooling and the tooling holding portion; and
a control unit configured to control the machine tool,
the control unit including
an acquisition unit configured to acquire the physical information from the detection unit while the tooling is mounted to the tooling holding portion,
a determining unit configured to determine, based on the acquired physical information, whether or not the tooling is mounted to the tooling holding portion in an inverted state of being inverted around an insertion direction in which the tooling is inserted into the tooling holding portion, and
an execution unit configured to execute predetermined processing in a case where the determining unit determined that the tooling is mounted to the tooling holding portion in the inverted state.

2. The machine tool according to claim 1,
wherein the detection unit includes a camera, and
the camera is configured to acquire, as the physical information, an image showing the gap.

3. The machine tool according to claim 1 or 2,
wherein the tooling holding portion includes an interlocking member configured to interlock with the HSK shank when the HSK shank is inserted into the insertion opening, and
the detection unit includes a position sensor configured to detect a position of the interlocking member as the physical information.

4. The machine tool according to any one of claims 1 to 3,
wherein the HSK shank includes a cylindrical portion,
the cylindrical portion includes
a first groove having a first depth in a direction along a central axis of the cylindrical portion, and
a second groove having a second depth in the direction along the central axis of the cylindrical portion,
the second depth is different from the first depth, and
the tooling holding portion includes
a first engaging portion configured to engage with the first groove when the HSK shank is inserted into the insertion opening, and
a second engaging portion configured to engage with the second groove when the HSK shank is inserted into the insertion opening.

5. The machine tool according to any one of claims 1 to 4,
wherein in a case where the physical information indicates that a width of the gap is greater than or equal to a predetermined value, the determining unit determines that the tooling is mounted to the tooling holding portion in the inverted state.

6. The machine tool according to any one of claims 1 to 5,
wherein the tooling holding portion includes at least one of a magazine, a spindle, and a tool rest.

7. The machine tool according to any one of claims 1 to 6, further comprising:
a display,
wherein the predetermined processing includes processing of display a warning indicating abnormal mounting of the tooling on the display, and
the warning includes a message prompting inversion and remounting of the tooling to the tooling holding portion.

8. A control method for controlling a machine tool,
the machine tool including a tooling holding portion having an insertion opening for a tooling,
the tooling including
a tool holding portion configured to hold a tool, and
an HSK shank configured to be inserted into the insertion opening,
the machine tool further including a detection unit configured to detect physical information indicating a state of a gap between the tooling and the tooling holding portion, and
the control method comprising:
a step of acquiring the physical information from the detection unit while the tooling is mounted to the tooling holding portion;
a step of determining, based on the acquired physical information, whether or not the tooling is mounted to the tooling holding portion in an inverted state of being inverted around an insertion direction in which the tooling is inserted into the tooling holding portion; and
a step of executing predetermined processing in a case where it was determined that the tooling is mounted to the tooling holding portion in the inverted state.

9. A control program for controlling a machine tool,
the machine tool including a tooling holding portion having an insertion opening for a tooling,
the tooling including
a tool holding portion configured to hold a tool, and
an HSK shank configured to be inserted into the insertion opening,
the machine tool further including a detection unit configured to detect physical information indicating a state of a gap between the tooling and the tooling holding portion, and
the control program causing the machine tool to execute:
a step of acquiring the physical information from the detection unit while the tooling is mounted to the tooling holding portion;
a step of determining, based on the acquired physical information, whether or not the tooling is mounted to the tooling holding portion in an inverted state of being inverted around an insertion direction in which the tooling is inserted into the tooling holding portion; and
a step of executing predetermined processing in a case where it was determined that the tooling is mounted to the tooling holding portion in the inverted state.
